# EUROPÄISCHE PATENTSCHRIFT

(11) **EP 1 881 649 B1**
(45) Veröffentlichungstag und Bekanntmachung des Hinweises auf die Patenterteilung: **27.02.2019**
(21) Anmeldenummer: 07012025.8
(22) Anmeldetag: 20.06.2007
(51) Int. Cl.: H04L 12/28, H04L 12/24

(54) **Anzeige- und Bediengerät der Gebäudesystemtechnik**
Display and command console for building technology management
Appareil d'affichage et de commande de la technique du bâtiment

(30) Priorität: 18.07.2006 DE 102006033134
(43) Veröffentlichungstag der Anmeldung: 23.01.2008
(73) Patentinhaber: ABB AG, 68309 Mannheim (DE)
(72) Erfinder: Fröchte, Bernd, Dr.-Ing., 45663 Recklinghausen (DE)

(56) Entgegenhaltungen:
- WO-A1-01/27893
- JP-A- 2006 098 256
- US-A1- 2004 083 128
- US-A1- 2005 015 222
- US-A1- 2005 096 753
- US-A1- 2006 116 853
- US-B1- 6 756 998

## Beschreibung

Die Erfindung bezieht sich auf ein Anzeige- und Bediengerät der Gebäudesystemtechnik, welches über eine Verarbeitungseinrichtung und ein Bussystem mit Aktoren verbunden ist, wobei jedem Aktor eine bestimmte Adresse innerhalb des Bussystems zugeordnet ist und an jeden Aktor mindestens ein elektrisches Gerät angeschlossen ist, und welches ein Touchscreen-Element für die Ansteuerung der elektrischen Geräte aufweist. Die Erfindung kann beispielsweise für Eingabegeräte im Bereich Installationssysteme der Gebäudesystemtechnik verwendet werden.

Im Bereich der Gebäudesystemtechnik sind Eingabegeräte bekannt, die über eine Touchscreen-Oberfläche die Bedienung von an ein Bussystem über Aktoren angeschlossenen elektrischen Geräten (Verbrauchern) erlauben. Üblich ist hier die Darstellung in Menü-Struktur oder durch Symbole, auf die zur Änderung des Schaltzustandes getippt wird. Zur Realisierung von Dimm-Funktionen sind symbolische Schieberegler üblich. Die Inbetriebnahme, d. h. Zuweisung der Aktoren zu den elektrischen Geräten erfolgt über eine separate Inbetriebnahme-Software, mit der die Menüpunkte oder die Symbole den entsprechenden Adressen der Aktoren zugeordnet werden.

Die Inbetriebnahme-Software ist an Symbole oder Menü-Texte gebunden, wodurch die Auswahl der gewünschten elektrischen Geräte durch Lesen und Identifizieren von Begriffen oder Symbolen realisiert werden muss. Beispielsweise sind auf der Seite "Wohnzimmer" Begriffe wie "Wandleuchte", "Deckenleuchte", "Jalousie Fenster links", "Jalousie Fenster rechts", "Jalousie Balkontür" vorhanden. Durch Klicken/Tippen auf einen dieser Begriffe erscheint die Abfrage zur Funktion, beispielsweise "EIN", "AUS", "AUF" oder "AB".
Aus der DE 10 2004 016 604 A1 ist ein Ein-/Ausgabegerät der Gebäudesystemtechnik mit einem freiprogrammierbaren Melde- und Bedientableau bekannt, welches eine Frontplatte mit darin integriertem Touchscreen-Element aufweist. Das Touchscreen-Element weist graphisch gestaltete Schaltflächen zur Programmierung/Bedienung auf, welche wegen eines zur Bedienung verwendbaren Bedienstiftes mit relativ feiner Struktur ausgeführt sein können. Alternativ kann auch eine Bedienung über Fingerdruck erfolgen. Ein Beispiel für die Programmierung ist die Einstellung verschiedener Tagesschaltuhren und/oder Wochenschaltuhren für verschiedene Geräte - wie Beleuchtungen, Rolladen, Jalousien, Heizung, welche über einen Installationsbus angesteuert werden. Die Frontplatte besitzt einen Einschubschlitz zur Einführung einer Speicherkarte in einen im Innenraum des Gehäuses angeordneten Speicherkartenlese zum Lesen/Beschriften einer gängigen Speicherkarte (Daten und/oder Programme). Des Weiteren weist das Gehäuse vielfältige Aufnahmemöglichkeiten (Slots) für Module (Ethernet, Video, Funk) auf.

Die US 6756998 B1 zeigt eine Benutzerschnittstelle für ein Hausautomatisierungssystem mit einem Touchscreen-Element, welches die Abbildung eines Raumes als Grafik benutzt.

Der Erfindung liegt die Aufgabe zugrunde, ein sehr einfach bedienbares Anzeige- und Bediengerät der Gebäudesystemtechnik anzugeben.

Diese Aufgabe wird durch die Erfindung gelöst, die als ein Anzeige- und Bediengerät gemäß dem Anspruch 1 definiert wird.

Die mit der Erfindung erzielbaren Vorteile bestehen insbesondere darin, dass nicht erst Menütexte und Begriffe gelesen oder Symbole identifiziert und verstanden werden müssen, bevor ein bestimmtes elektrisches Gerät in gewünschter Weise und unter Verwendung des Anzeige- und Bediengerätes angesteuert werden kann. Das anzusteuernde Gerät wird vielmehr unmittelbar auf dem Foto erkannt und mittels Berührung der Foto-Abbildungsfläche dieses Gerätes unmittelbar angesteuert.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine schematische Darstellung eines Anzeige- und Bediengeräts der Gebäudesystemtechnik mit mehreren an ein Bussystem angeschlossenen elektrischen Geräten,
- Fig. 2: ein Anzeige- und Bediengerät mit Darstellung des Grundrisses eines Hauses.

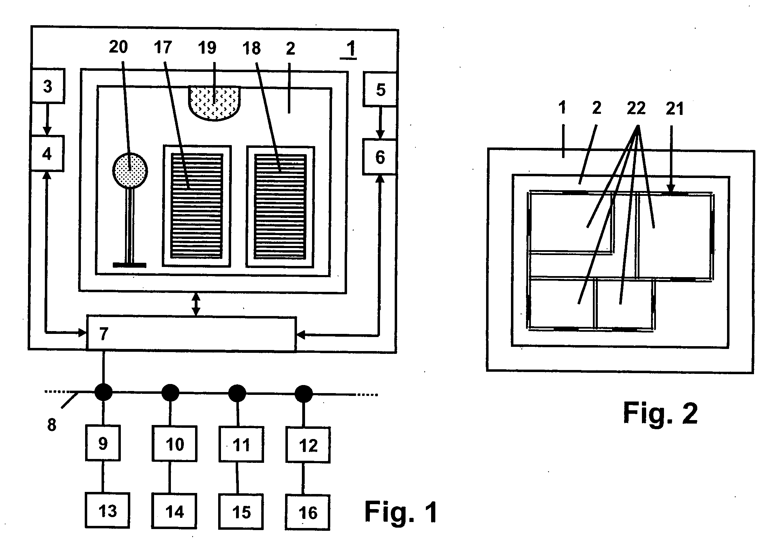

In Fig. 1 ist eine schematische Darstellung eines Anzeige- und Bediengeräts der Gebäudesystemtechnik mit mehreren an ein Bussystem angeschlossenen elektrischen Geräten dargestellt. Es ist ein Anzeige- und Bediengerät 1 gezeigt, welches aufweist:
- ein Touchscreen-Element 2,
- eine eingebaute Kamera (optional) 3,
- ein Speicherelement 4 zur Abspeicherung von Bildinformationen der Kamera 3,
- ein Kartenlesegerät 5 zur Eingabe von Bildinformationen mittels Karte, beispielsweise SD-Karte,
- ein Speicherelement 6 zur Abspeicherung von über das Kartenlesegerät 5 eingegebenen Bildinformationen,
- eine Verarbeitungseinrichtung 7, welche mit dem Touchscreen-Element 2, dem Speicherelement 4, dem Speicherelement 6 und dem Bussystem verbunden ist.

Die Verarbeitungseinrichtung 7 ist über das Bussystem 8 mit mehreren Aktoren 9 bzw. 10 bzw. 11 bzw. 12 verbunden, an welche jeweils ein elektrisches Gerät 13 bzw. 14 bzw. 15 bzw. 16 angeschlossen ist.

Für die Inbetriebnahme des Anzeige- und Bediengerätes 1 werden in einem ersten Schritt Bildinformationen sowohl des Grundrisses des Hauses - zweckmäßig über eine geeignete Karte und das Kartenlesegerät 5 zum Speicherelement 6 - als auch Fotos betreffend die einzelnen Räume des Hauses eingegeben. Letzteres kann erfolgen
- durch Eigenaufnahme mittels der Kamera 3 und Abspeicherung im Speicherelement 4,
- durch Fremdaufnahme mittels einer separaten Kamera, wobei das Fremdbild auf einem Speichermedium abgespeichert wird und ein Einlesen in das Speicherelement 6 mittels geeigneter Karte und das Kartenlesegerät 5 erfolgt.

In einem zweiten Schritt erfolgt für jeden Raum des Hauses und für jedes elektrische Gerät separat die Zuordnung zwischen einer Foto-Abbildungsfläche eines bestimmten elektrischen Gerätes im Tochscreen-Element und dem elektrischen Gerät selbst. Hierzu wird auf dem Touchscreen-Element 2 das Foto des gewählten Raumes angezeigt. Das auf dem Foto erkennbare elektrischen Geräte, beispielsweise eine über einen aktor betriebene Deckenleuchte oder eine Standleuchte, wird unter Verwendung eines Stiftes mit einem Kästchen umrandet und dem entsprechenden Aktor des Gerätes mittels seiner im System individuellen Adresse zugeordnet. Am jeweiligen Aktor selbst ist hierzu in bekannter Art und Weise die Programmiertaste zu drücken. In diesem Zusammenhang wird auch ein Fenster mit einer mittels eines Jalousieantriebs zu öffnenden / zu schließenden Jalousie als "elektrisches Gerät" bezeichnet. Auf diese Weise erfolgt mittels der Verarbeitungseinrichtung 7 sukzessive die Zuordnung der Adresse eines bestimmten Aktors zur Foto-Abbildungsfläche eines bestimmten, in einem Foto im Touchscreen-Element 2 gezeigten elektrischen Geräts.

Für die Ansteuerung eines elektrischen Gerätes während des späteren Betriebes reicht es dann aus, das anzusteuernde Gerät auf dem Touchscreen-Element 2 anzuklicken bzw. mit einem Stift auf die Foto-Abbildungsfläche des anzusteuernden Geräts zu tippen, um eine gewünschte Aktor-Funktion einzuleiten. Folgende Aktor-Funktionen sind realisierbar (keine abschließende Darstellung):
- Für das Einschalten / Ausschalten einer Beleuchtung - siehe Deckenleuchte 19 in Fig. 1 - genügt es, mit dem Stift oder mit dem Finger auf die Foto-Abbildungsfläche des anzusteuernden Gerät zu tippen, hierauf erfolgt bei einem ausgeschalteten Gerät das Einschalten sowie bei einem eingeschalteten Gerät das Ausschalten.
- Zum Aufwärts-Dimmen einer Beleuchtung (in Richtung "heller") - siehe Standleuchte 20 in Fig. 1 - wird mit dem Stift oder Finger von unten nach oben über die Foto-Abbildungsfläche des anzusteuernden Geräts gestrichen, bis die gewünschte Helligkeit erreicht ist oder es wird kurz auf die Foto-Abbildungsfläche der Beleuchtung getippt.
- Zum Abwärts-Dimmen einer Beleuchtung (in Richtung "dunkler") wird mit dem Stift oder Finger von oben nach unten über die Foto-Abbildungsfläche des anzusteuernden Geräts gestrichen, bis die gewünschte Helligkeit erreicht ist oder es wird kurz auf die Foto-Abbildungsfläche der Beleuchtung getippt.
- Zum Öffnen einer Jalousie - siehe Jalousien 17, 18 in Fig. 1 - wird mit dem Stift oder Finger von unten nach oben über die Foto-Abbildungsfläche der anzusteuernden Jalousie bis zur gewünschten Position gestrichen. Ein kurzes Tippen auf die Foto-Abbildungsfläche der Jalousie lässt sie an der augenblicklichen Position anhalten.
- Zum Schließen einer Jalousie wird mit dem Stift oder Finger von oben nach unten über die Foto-Abbildungsfläche der anzusteuernden Jalousie bis zur gewünschten Position gestrichen. Ein kurzes Tippen auf die Foto-Abbildungsfläche der Jalousie lässt sie an der augenblicklichen Position anhalten.

In einer abgewandelten Ausführungsform wird beim Antippen / Anklicken einer Leuchte mit Dimm-Aktor oder einer Jalousie ein symbolischer Schieberegler neben dem angetippten / angeklickten Gerät für die Zeit der Bedienung eingeblendet, über den dann die gewünschte Helligkeit oder Jalousieposition direkt eingegeben werden kann.

Alle vorstehend angeführten Funktionen erfolgen unter Einsatz der Verarbeitungseinrichtung 7, des Bussystems 8 und der per Adresse angesprochenen Aktoren.

Können alle über das Bussystem 8 ansteuerbaren elektrischen Geräte eines Raumes nicht in einem einzigen Foto dargestellt werden, werden zweckmäßig zwei oder mehr Fotos dieses Raumes nebeneinander auf dem Touchscreen-Element 2 abgebildet, beispielsweise zeigt jedes Foto eine Wand des Raumes.

Zur Auswahl eines bestimmten Raumes ist auf dem Touchscreen-Element 2 auf einer Übersichtsseite der Grundriss des Hauses dargestellt - siehe Fig. 2. Zur Auswahl des gewünschten Raumes wird mit dem Stift oder Finger auf die Foto-Abbildungsfläche dieses Raumes im Grundriss 21 getippt - siehe die verschiedenen Räume 22 des Grundrisses. Hierauf wird das Foto dieses bestimmten Raumes auf dem Touchscreen-Element 2 abgebildet und die Bedienung von elektrischen Geräten erfolgt wie vorstehend erläutert.

Alternativ sind auf dem Touchscreen-Element 2 die einzelnen Räume des Hauses in kleinen Fotos nebeneinander dargestellt, wodurch die Auswahl des gewünschten Raumes vereinfacht wird. Durch Tippen auf das Foto des gewünschten Raumes wird das Foto dieses Raumes in vergrößerter Weise abgebildet. Allerdings ist bei dieser Abbildungsform ein relativ großflächiges Touchscreen-Element vorteilhaft, um zunächst trotz der verkleinerten Abbildung alle Räume mit ausreichender Größe und Deutlichkeit zeigen zu können.

Wenn vorstehend von der Abbildung eines Raumes in Form eines Fotos die Rede ist, umfasst dies auch abstrahierende Grafiken, nicht jedoch die Abbildung von Geräten durch Symbole.

### Bezugszeichenliste:

- 1: Anzeige- und Bediengerät
- 2: Touchscreen-Element
- 3: Kamera
- 4: Speicherelement
- 5: Kartenlesegerät
- 6: Speicherelement
- 7: Verarbeitungseinrichtung
- 8: Bussystem
- 9: Aktor
- 10: Aktor
- 11: Aktor
- 12: Aktor
- 13: elektrisches Gerät
- 14: elektrisches Gerät
- 15: elektrisches Gerät
- 16: elektrisches Gerät
- 17: Jalousie
- 18: Jalousie
- 19: Deckenleuchte
- 20: Standleuchte
- 21: Grundriss eines Hauses
- 22: Räume des Hauses

## Patentansprüche

1. Anzeige- und Bediengerät (1) der Gebäudesystemtechnik, welches ein Touchscreen-Element (2), ein Speicherelement (4, 6) zur Abspeicherung von Bildinformationen, eine Verarbeitungseinrichtung (7) und zusätzlich eine Kamera (3) oder ein Kartenlesegerätes (5) aufweist, wobei das Anzeige- und Bediengerät (1) daran angepasst ist, um:
- über die Verarbeitungseinrichtung (7) und ein Bussystem (8) mit Aktoren (9, 10, 11, 12) zu verbinden, wobei jedem Aktor eine bestimmte Adresse innerhalb des Bussystems zugeordnet ist und an jeden Aktor mindestens ein elektrisches Gerät (13, 14, 15, 16, 17, 18, 19, 20) angeschlossen ist, das sich in einem entsprechenden Raum eines Hauses befindet,
wobei das Anzeige- und Bediengerät **dadurch gekennzeichnet ist, dass** es daran weiter angepasst ist, um:
- mindestens eine Aufnahme eines Raumes oder eines Teilbereiches eines Raumes mittels der eingebauten Kamera (3) als Eigenaufnahme des Raumes oder Teilbereiches oder mittels des eingebauten Kartenlesegerätes (5) als Fremdaufnahme des Raumes (22) oder Teilbereiches durchzuführen,
- die mindestens eine Aufnahme in einem Speicherelement (4, 6) abzuspeichern,
- auf dem Touchscreen-Element (2) das mindestens ein Raum (22) oder Teilbereich in Form der entsprechenden Aufnahme anzuzeigen, auf welchem die anzusteuernden elektrischen Geräte (13 bis 20) dieses mindestens einen Raumes oder Teilbereiches erkennbar sind, und
- für jedes der elektrischen Geräte:
-- über die Verarbeitungseinrichtung (7) die Foto-Abbildungsfläche des auf der entsprechenden Aufnahme erkennbaren bestimmten elektrischen Geräte (13, 14, 15, 16, 17, 18, 19, 20) der dem Aktor dieses elektrischen Gerätes (13, 14, 15, 16, 17, 18, 19, 20) zugeordneten Adresse zuzuweisen, und
-- bei Berührung der Foto-Abbildungsfläche des elektrischen Gerätes über die Verarbeitungseinrichtung (7) eine Funktion des Aktors des elektrischen Gerätes umzusetzen und das elektrische Gerät (13, 14, 15, 16, 17, 18, 19, 20) unmittelbar anzusteuern.

2. Anzeige- und Bediengerät nach Anspruch 1, das daran angepasst ist, dass die mindestens eine Aufnahme, die zwei oder mehr Fotos eines Raumes sind, nebeneinander auf dem Touchscreen-Element (2) abzubilden.

3. Anzeige- und Bediengerät nach einem der vorstehenden Ansprüche, das daran angepasst ist, um in einer Situation, in der eines der elektrischen Geräte ein Beleuchtungsgerät ist und Funktionen des Aktors dieses elektrischen Gerätes ein Aufwärts-Dimmen respektive ein Abwärts-Dimmen der Beleuchtung umfassen, zum Aufwärts-Dimmen respektive Abwärts-Dimmen der Beleuchtung über die Foto-Abbildungsfläche des Beleuchtungsgerätes von unten nach oben respektive von oben nach unten zu streichen.

4. Anzeige- und Bediengerät nach einem der vorstehenden Ansprüche, das daran angepasst ist, um in einer Situation, in der eines der elektrischen Geräte eine Jalousie ist und Funktionen des Aktors dieses elektrischen Gerätes ein Öffnen respektive ein Schließen der Jalousie umfassen, zum Öffnen respektive Schließen einer Jalousie über die Foto-Abbildungsfläche der anzusteuernden Jalousie von unten nach oben respektive von oben nach unten zu streichen.

5. Anzeige- und Bediengerät nach Anspruch 3 oder 4, das daran angepasst ist beim Antippen / Anklicken der Beleuchtung oder Jalousie ein symbolischer Schieberegler neben dem angetippten / angeklickten elektrischen Gerät einzublenden, um die gewünschte Helligkeit oder Position einzugeben.

6. Anzeige- und Bediengerät nach einem der vorstehenden Ansprüche, das daran angepasst ist, um zur Auswahl eines bestimmten Raumes (22) eines Hauses auf dem Touchscreen-Element (2) den Grundriss (21) des Hauses darzustellen.

7. Anzeige- und Bediengerät nach einem der vorstehenden Ansprüche, das daran angepasst ist, um zur Auswahl eines bestimmten Raumes (22) eines Hauses auf dem Touchscreen-Element (2) die einzelnen Räume des Hauses in Fotos nebeneinander darzustellen.

## Claims

1. Display and operating apparatus (1) appertaining to building systems engineering, comprising a touchscreen element (2), a memory element (4, 6) for storing image information, a processing device (7) and additionally a camera (3) or a card reader (5), wherein the display and operating apparatus (1) is adapted:
- to connect to actuators (9, 10, 11, 12) via the processing device (7) and a bus system (8), wherein each actuator is assigned a specific address within the bus system and at least one electrical apparatus (13, 14, 15, 16, 17, 18, 19, 20) situated in a corresponding room of a house is connected to each actuator,
wherein the display and operating apparatus is **characterized in that** it is further adapted:
- to carry out at least one recording of a room or of a partial area of a room by means of the built-in camera (3) as internal recording of the room or partial area or by means of the built-in card reader (5) as external recording of the room (22) or partial area,
- to store the at least one recording in a memory element (4, 6),
- to display on the touchscreen element (2) the at least one room (22) or partial area in the form of the corresponding recording, on which the electrical apparatuses (13 to 20) to be driven for said at least one room or partial area are identifiable, and
- for each of the electrical apparatuses:
-- via the processing device (7), to allocate the photograph imaging area of the specific electrical apparatus (13, 14, 15, 16, 17, 18, 19, 20) identifiable on the corresponding recording to the address assigned to the actuator of said electrical apparatus (13, 14, 15, 16, 17, 18, 19, 20), and
-- upon the photograph imaging area of the electrical apparatus being touched, via the processing device (7), to implement a function of the actuator of the electrical apparatus and to directly drive the electrical apparatus (13, 14, 15, 16, 17, 18, 19, 20).

2. Display and operating apparatus according to Claim 1, which is adapted to image the at least one recording, being two or more photographs of a room, next to one another on the touchscreen element (2).

3. Display and operating apparatus according to either of the preceding claims, which is adapted, in a situation in which one of the electrical apparatuses is a lighting apparatus and functions of the actuator of said electrical apparatus comprise upward dimming and respectively downward dimming of the lighting, for the upward dimming and respectively downward dimming of the lighting, to sweep over the photograph imaging area of the lighting apparatus from bottom to top and respectively from top to bottom.

4. Display and operating apparatus according to any of the preceding claims, which is adapted, in a situation in which one of the electrical apparatuses is a blind and functions of the actuator of said electrical apparatus comprise opening and respectively closing the blind, for the opening and respectively closing of a blind, to sweep over the photograph imaging area of the blind to be driven from bottom to top and respectively from top to bottom.

5. Display and operating apparatus according to Claim 3 or 4, which is adapted, in the event of tapping/clicking on the lighting or blind, to insert a symbolic sliding controller alongside the electrical apparatus tapped/clicked on, in order to input the desired brightness or position.

6. Display and operating apparatus according to any of the preceding claims, which is adapted to represent the plan (21) of a house for the purpose of selecting a specific room (22) of the house on the touchscreen element (2).

7. Display and operating apparatus according to any of the preceding claims, which is adapted to represent the individual rooms of a house in photographs next to one another for the purpose of selecting a specific room (22) of the house on the touchscreen element (2).

## Revendications

1. Appareil d'affichage et de commande (1) du secteur de la domotique, lequel possède un élément à écran tactile (2), un élément de mémoire (4, 6) destiné à mémoriser des informations d'image, un dispositif de traitement (7) et en plus une caméra (3) ou un lecteur de carte (5), l'appareil d'affichage et de commande (1) étant adapté pour :
- se connecter à des actionneurs (9, 10, 11, 12) par le biais du dispositif de traitement (7) et d'un système de bus (8), une adresse donnée étant associée à chaque actionneur au sein du système de bus et à chaque actionneur étant connecté au moins un appareil électrique (13, 14, 15, 16, 17, 18, 19, 20) qui se trouve dans une pièce correspondante d'une maison,
l'appareil d'affichage et de commande étant **caractérisé en ce qu'**il est ici en outre adapté pour :
- effectuer au moins un enregistrement d'une pièce ou d'une zone partielle d'une pièce au moyen de la caméra (3) incorporée sous la forme d'un enregistrement propre de la pièce ou de la zone partielle ou au moyen du lecteur de carte (5) incorporé sous la forme d'un enregistrement externe de la pièce (22) ou de la zone partielle,
- mémoriser l'au moins un enregistrement dans un élément de mémoire (4, 6),
- afficher l'au moins une pièce (22) ou zone partielle sur l'élément à écran tactile (2) sous la forme de l'enregistrement correspondant, sur lequel les appareils électriques (13 à 20) à commander de cette au moins une pièce ou zone partielle sont reconnaissables, et
- pour chacun des appareils électriques :
-- par le biais du dispositif de traitement (7), attribuer à la surface de représentation photographique de l'appareil électrique (13, 14, 15, 16, 17, 18, 19, 20) défini reconnaissable sur l'enregistrement correspondant l'adresse associée à l'actionneur de cet appareil électrique (13, 14, 15, 16, 17, 18, 19, 20), et
-- en cas de toucher de la surface de représentation photographique de l'appareil électrique, mettre en oeuvre une fonction de l'actionneur de l'appareil électrique par le biais du dispositif de traitement (7), et commander directement l'appareil électrique (13, 14, 15, 16, 17, 18, 19, 20).

2. Appareil d'affichage et de commande selon la revendication 1, lequel est adapté de telle manière à représenter l'au moins un enregistrement, lequel contient deux photos ou plus d'une pièce, juxtaposé sur l'élément à écran tactile (2).

3. Appareil d'affichage et de commande selon l'une des revendications précédentes, lequel est adapté pour, dans une situation dans laquelle l'un des appareils électriques est un appareil d'éclairage et les fonctions de l'actionneur de cet appareil électrique comprennent respectivement une augmentation et une diminution de l'intensité lumineuse de l'éclairage, un balayage du bas vers le haut ou du haut vers le bas sur la surface de représentation photographique de l'appareil d'éclairage en vue d'augmenter ou de diminuer l'intensité lumineuse de l'éclairage.

4. Appareil d'affichage et de commande selon l'une des revendications précédentes, lequel est adapté pour, dans une situation dans laquelle l'un des appareils électriques est un store et les fonctions de l'actionneur de cet appareil électrique comprennent une ouverture et une fermeture du store, un balayage du bas vers le haut ou du haut vers le bas sur la surface de représentation photographique du store à commander en vue d'ouvrir ou de fermer un store.

5. Appareil d'affichage et de commande selon la revendication 3 ou 4, lequel est adapté pour, lors d'une sélection par effleurement / clic de l'éclairage ou du store, afficher en incrustation à côté de l'appareil électrique sélectionné par effleurement / clic un élément de réglage à curseur servant à saisir la luminosité ou la position souhaitée.

6. Appareil d'affichage et de commande selon l'une des revendications précédentes, lequel est adapté pour, en vue de sélectionner une pièce (22) définie d'une maison, représenter sur l'élément à écran tactile (2) une projection horizontale (21) de la maison.

7. Appareil d'affichage et de commande selon l'une des revendications précédentes, lequel est adapté pour, en vue de sélectionner une pièce (22) définie d'une maison, représenter sur l'élément à écran tactile (2) les pièces individuelles de la maison dans des photos juxtaposées.
